# EUROPÄISCHE PATENTANMELDUNG

(11) **EP 4 834 505 A1**
(43) Veröffentlichungstag der Anmeldung: **04.11.2026**
(21) Anmeldenummer: 25173109.7
(22) Anmeldetag: 29.04.2025
(51) Int. Cl.: B23B 1/00, B23B 27/12, B23B 3/22, B23B 7/12, B23Q 15/007

(54) **VORRICHTUNG UND VERFAHREN ZUR BEARBEITUNG EINES WERKSTÜCKS**

(71) Anmelder: DVS Innovation GmbH, 37269 Eschwege Hessen (DE)
(72) Erfinder: Preis, Mario, 35287 Amöneburg (DE); Reinhardt, Jörg, 99826 Berka v. d. Hainich (DE)
(74) Vertreter: Weilnau, Carsten

(57) **Zusammenfassung**

Die vorliegende Erfindung betrifft eine Vorrichtung, ein Verfahren und ein Computerprogrammprodukt zur Bearbeitung, eines Werkstücks, wobei die Vorrichtung (1) folgendes umfasst:
- eine Werkzeugspindel (12) zur Aufnahme und drehbaren Lagerung eines spanabhebenden Bearbeitungswerkzeugs (30) um eine Werkzeugdrehachse (Z),
- eine Werkstückspindel (4) zur Aufnahme und drehbaren Lagerung eines Werkstücks (50) um eine Werkstückdrehachse (W), wobei das Werkstück (W) eine mittels des Bearbeitungswerkzeugs (30) zu bearbeitende und sich transversal zur Werkstückdrehachse (W) erstreckende Stirnfläche (54) aufweist,
- wobei eine Ausrichtung und eine Position der Werkzeugdrehachse (Z) relativ zur Werkstückdrehachse (W) und/oder relativ zur Stirnfläche (54) des Werkstücks (50) einstellbar ist,
- eine mit der Werkzeugspindel (12) und mit der Werkstückspindel (4) gekoppelten Steuerung (70), welche dazu ausgestaltet ist, eine sich zumindest abschnittsweise tangential zur Werkzeugdrehachse (Z) erstreckende und um die Werkzeugdrehachse (Z) rotierende Schneide (31, 32) eines mittels der Werkzeugspindel (12) drehbar angetriebenen Bearbeitungswerkzeugs (30) mit einem Bearbeitungsbereich (B) der Stirnfläche (54) des sich um die Werkstückachse (W) drehenden Werkstücks (50) spanabhebend in Eingriff zu bringen.

## Beschreibung

### Technisches Gebiet

Die vorliegende Erfindung betrifft eine Vorrichtung, ein Verfahren und ein Computerprogrammprodukt zur Bearbeitung, insbesondere zur spanabhebenden Bearbeitung eines Werkstücks, insbesondere einer Stirnfläche eines Werkstücks.

### Hintergrund

Zu den wichtigsten Fertigungsverfahren der Zerspanungstechnik zählt das spanabhebende Drehen. Hierbei rotiert das Werkstück um seine eigene Drehachse. Ein Bearbeitungswerkzeug, typischerweise in Form eines Drehmeißels fährt dabei eine am Werkstück zu erzeugende Kontur ab. Bei besonders harten Werkstücken, etwa im Bereich der Metallbearbeitung unterliegen derartige zerspanende Werkzeuge einem recht hohen Verschleiß. Dies bedingt einen vergleichsweise häufigen Wechsel des Bearbeitungswerkzeugs, der mit relativ hohen Stillstandzeiten einer entsprechenden Bearbeitungsvorrichtung, beispielsweise einer Drehmaschine, und mit entsprechenden Kosten für die Wiederherstellung oder Neubeschaffung solcher Bearbeitungswerkzeuge einhergeht.

Der Werkzeugverschleiß ist insbesondere bei vergleichsweise harten Werkstücken, etwa keramischen Werkstücken oder bei Werkstücken mit einer Hartstoffbeschichtung besonders hoch. Des Weiteren ist zum Beispiel die abrasive oder zerspanende Bearbeitung von planparallelen Flächen von Werkstücken, etwa gegenüberliegender Planflächen von Bremsscheiben für Kraftfahrzeuge technisch anspruchsvoll, zeitaufwendig und kostenintensiv.

Demgegenüber liegt der vorliegenden Erfindung die Aufgabe zugrunde, ein neuartiges Verfahren, eine Vorrichtung, ein Bearbeitungswerkzeug sowie ein Computerprogramm für den Betrieb einer solchen Vorrichtung und die Implementierung eines solchen Verfahrens bereitzustellen, bei welchen für die zerspanende Bearbeitung von Werkstücken die Werkzeugkosten gesenkt, die Lebensdauer von Werkzeugen verlängert und Stillstandzeiten einer spanabhebenden Bearbeitungsmaschine verkürzt werden können.

### Vorteilhafte Ausgestaltungen

Diese Aufgabe wird mit einer Vorrichtung zur spanabhebenden Bearbeitung eines Werkstücks, mit einem Verfahren zur spanabhebenden Bearbeitung eines Werkstücks sowie mit einem zugehörigen Computerprogrammprodukt gemäß den Merkmalen der jeweils unabhängigen Patentansprüche gelöst. Vorteilhafte Ausgestaltungen sind dabei jeweils Gegenstand abhängiger Patentansprüche.

Insoweit und nach einem ersten Aspekt ist eine Vorrichtung zur spanabhebenden Bearbeitung eines Werkstücks vorgesehen. Die Vorrichtung umfasst eine Werkzeugspindel zur Aufnahme und drehbaren Lagerung, insbesondere zum drehbaren Antrieb eines spanabhebenden Bearbeitungswerkzeugs. Das spanabhebende Bearbeitungswerkzeug rotiert hierbei um eine von der Werkzeugspindel vorgegebene oder definierte Werkzeugdrehachse.

Die Vorrichtung umfasst ferner eine Werkstückspindel zur Aufnahme und drehbaren Lagerung eines Werkstücks, etwa eines rotationssymmetrischen Werkstücks, wie zum Beispiel einer Bremsscheibe. Die Werkstückspindel dient der Aufnahme, Fixierung und/oder drehbaren Lagerung des Werkstücks um eine Werkstückdrehachse. Das Werkstück weist typischerweise eine mittels des Bearbeitungswerkzeugs zu bearbeitende und sich transversal zur Werkstückdrehachse erstreckende Stirnfläche auf. Die Stirnfläche des Werkstücks kann sich insbesondere im Wesentlichen senkrecht zur Längserstreckung der Werkstückdrehachse erstrecken. Mit anderen Worten kann die Stirnfläche eine Flächennormale aufweisen, die sich parallel zur Längserstreckung der Werkstückdrehachse erstreckt.

Bei der Vorrichtung kann eine Ausrichtung und eine Position der Werkzeugdrehachse relativ zur Werkstückdrehachse und/oder relativ zur Stirnfläche des Werkstücks einstellbar, insbesondere variabel und stufenlos einstellbar sein.

Die Vorrichtung umfasst ferner eine mit der Werkzeugspindel und mit der Werkstückspindel gekoppelte Steuerung, welche dazu ausgestaltet ist, eine sich zumindest abschnittsweise tangential zur Werkzeugdrehachse erstreckende und um die Werkstückdrehachse rotierende Schneide eines Bearbeitungswerkzeugs mit einem Bearbeitungsbereich der Stirnfläche des sich um die Werkstückdrehachse drehenden Werkstücks spanabhebend in Eingriff zu bringen.

Mittels der Werkzeugspindel wird hierbei das Bearbeitungswerkzeug drehbar angetrieben, bzw. es ist mittels der Werkzeugspindel um die Werkzeugdrehachse drehbar, bzw. es ist drehbar um die Werkzeugdrehachse antreibbar.

Die Werkstückspindel als auch die Werkzeugspindel weisen typischerweise entsprechende Drehantriebe auf, um einerseits das Werkzeug um die Werkzeugdrehachse drehbar anzutreiben und um andererseits das Werkstück in Bezug auf die Werkstückdrehachse drehbar anzutreiben.

Typischerweise weist die Vorrichtung einen Spindelantrieb für die Werkstückspindel als auch einen Spindelantrieb für die Werkzeugspindel auf. Entsprechende Spindelantriebe können von der Steuerung angesteuert und dementsprechend kontrolliert und/oder geregelt werden. Die Steuerung kann somit die Drehzahlen der Werkstückspindel und der Werkzeugspindel bedarfsgerecht einstellen. Ferner ist zumindest die Werkstückspindel und/oder die Werkzeugspindel hinsichtlich ihrer entsprechenden Drehachse variabel positionierbar und/oder ausrichtbar, um einen vorgegebenen Achskreuzwinkel und einen vorgegebenen Achsabstand zwischen der Werkzeugdrehachse und der Werkstückdrehachse einzustellen.

Die Vorrichtung ist insbesondere dazu ausgestaltet, dass während der spanabhebenden Bearbeitung der Stirnfläche des Werkstücks beide, d.h. die Werkzeugspindel als auch die Werkstückspindel eine Drehbewegung ausführen, sodass für die spanabhebende Bearbeitung der Stirnfläche des Werkstücks eine Art Schälprozess oder Wälzschälprozess und damit eine Art schneidende Bearbeitung der Stirnfläche des Werkstücks erfolgen kann.

Insoweit ist die Vorrichtung mit der Werkzeugspindel, der Werkstückspindel und der hiermit gekoppelten Steuerung dazu ausgestaltet, für die spanabhebende Bearbeitung der rotierenden Stirnfläche des Werkstücks, das rotierende Bearbeitungswerkzeug spanabhebend mit der rotierenden Stirnfläche des Werkstücks in Eingriff zu bringen.

Nach einer weiteren Ausgestaltung ist insbesondere vorgesehen, dass zumindest die Werkstückspindel und/oder die Werkzeugspindel hinsichtlich ihrer Drehachse variabel ausrichtbar, bzw. variabel positionierbar ist, um etwa einen vorgegebenen Achskreuzwinkel zwischen der Werkstückdrehachse und der Werkstückdrehachse einzustellen. Die etwa freie Positionierbarkeit und/oder Ausrichtbarkeit der Werkzeugspindel, insbesondere der Werkzeugachse relativ zur Werkstückspindel, respektive der Werkstückdrehachse ermöglicht ferner die Einstellung eines für die spanabhebende Bearbeitung der Stirnfläche vorgesehenen Achsabstands zwischen der Werkzeugdrehachse und der Werkstückdrehachse sowie eines vorgegebenen Kipp- oder Freiwinkels, unter welchem die Schneide des Werkzeugs mit der Stirnfläche des Werkstücks spanabhebend und/oder schälend in Eingriff gelangt.

Typischerweise weist die Vorrichtung hierfür eine geeignete Positioniereinrichtung auf, mittels welcher die Position der Werkzeugspindel relativ zur Werkstückspindel bedarfsgerecht eingestellt werden kann als auch die Werkzeugdrehachse relativ zur Werkstückdrehachse ausrichtbar ist. Die Positioniereinrichtung kann insbesondere zur variablen und stufenlosen Einstellung von Position und Ausrichtung der Werkzeugspindel relativ zur Werkstückspindel ausgestaltet sein. Die entsprechende Positioniereinrichtung kann ferner mit der Steuerung gekoppelt sein und von der Steuerung geregelt, bzw. eingestellt werden. Die Steuerung kann somit dazu ausgestaltet sein, die Werkzeugspindel relativ zur Werkstückspindel zu positionieren und auszurichten.

Das in der Werkzeugspindel aufzunehmenden Bearbeitungswerkzeug zeichnet sich durch eine sich zumindest abschnittsweise tangential zur Werkzeugdrehachse erstreckende und um die Werkzeugdrehachse rotierende Schneide auf. Das Bearbeitungswerkzeug kann insbesondere einen mit der Werkzeugdrehachse zusammenfallenden oder parallel hierzu verlaufenden Schaft aufweisen. Mittels des Schafts ist das Bearbeitungswerkzeug lösbar an der Werkzeugspindel anordenbar, bzw. drehfest befestigbar.

Die Schneide des Bearbeitungswerkzeugs ist um einen Werkzeugradius radial von der Werkzeugdrehachse beabstandet angeordnet oder ausgebildet. Die Schneide des Bearbeitungswerkzeugs weist zudem eine gewisse Erstreckung in Tangentialrichtung in Bezug auf die Werkstückdrehachse, bzw. in Bezug auf den Schaft des Bearbeitungswerkzeugs auf.

Aufgrund eines eingestellten Achskreuzwinkels zwischen der Werkzeugdrehachse und der Werkstückdrehachse ergibt sich ein vergleichsweise kleiner wechselseitiger Bearbeitungsbereich auf der Stirnfläche und an der Schneide des Bearbeitungswerkzeugs. Durch ein Rotieren des Bearbeitungswerkzeugs um die Werkzeugdrehachse gelangen, anders als beim herkömmlichen drehenden spanabhebenden Bearbeiten von Werkstücken, unterschiedliche und in Umfangs- oder Tangentialrichtung benachbart aneinander angrenzende Bereiche oder Segmente der Schneide des Bearbeitungswerkzeugs mit der zu bearbeitenden und rotierenden Stirnfläche des Werkstücks sukzessive in Eingriff.

Dadurch dass das Bearbeitungswerkzeug eine definierte Erstreckung in Tangentialrichtung in Bezug auf die Werkzeugdrehachse aufweist und dadurch dass das Bearbeitungswerkzeug mit der rotierenden Stirnfläche in Eingriff stehend ebenfalls um seine Werkzeugdrehachse drehend angetrieben wird, kann die Schneide im Unterschied zu einem herkömmlichen Drehmeißel hinsichtlich ihrer effektiven Länge deutlich vergrößert werden. Die tangentiale Erstreckung der rotierenden Schneide sorgt schließlich dafür, dass immer nur ein Teilbereich der rotierenden Schneide mit der rotierenden Stirnfläche des Werkstücks spanabhebend in Eingriff steht.

Durch die Drehung des Bearbeitungswerkzeugs während der spanabhebenden Bearbeitung der Stirnfläche des Werkstücks können mechanische und auch thermische Belastungen auf Seiten des Bearbeitungswerkzeugs über die sich fortwährend, ggf. gleichförmig drehende und in Tangentialrichtung erstreckende Schneide vergleichsweise homogen verteilt werden. Die mechanische als auch thermische Beanspruchung des Bearbeitungswerkzeugs kann auf diese Art und Weise gesenkt und optimiert werden, was sich verlängernd auf die Lebensdauer des Werkzeugs und verkürzend auf die Stillstandzeiten der Bearbeitungsvorrichtung für einen Werkzeugwechsel auswirken kann.

Nach einer weiteren Ausgestaltung ist die Vorrichtung mit dem Bearbeitungswerkzeug ausgestattet. Das Bearbeitungswerkzeug kann lösbar, mithin auswechselbar an der Werkzeugspindel angeordnet sein.

Nach einer weiteren Ausführungsform der Vorrichtung ist ein radialer Abstand zwischen dem Bearbeitungsbereich der Stirnfläche des Werkstücks, mit welchem das Werkzeug spanabhebend in Eingriff steht oder in Eingriff bringbar ist und der Werkstückdrehachse als Bearbeitungsradius variabel einstellbar. Mit anderen Worten wird der radiale Abstand zwischen dem Bearbeitungsbereich oder Bearbeitungspunkt der Stirnfläche des Werkstücks, mit welchem das Werkzeug spanabhebend in Eingriff steht oder in Eingriff bringbar ist, und der Werkstückdrehachse als Bearbeitungsradius bezeichnet.

Jener Bearbeitungsradius ist während der spanabhebenden Bearbeitung des Werkstücks variabel, vorzugsweise stufenlos einstellbar. Auf diese Art und Weise kann das sich um die Werkzeugachse drehende Werkzeug während seiner kontinuierlichen Drehbewegung mit variablem Bearbeitungsradius über die Stirnfläche geführt werden und somit aufgrund der Drehbewegung des Werkstücks mit der gesamten zu bearbeitenden Stirnfläche sukzessive in Eingriff gelangen, sodass mittels der hier vorgesehenen spanabhebenden Bearbeitung des Werkstücks eine Planfläche hoher Güte und Qualität erzeugbar ist.

Nach einer weiteren Ausgestaltung der Vorrichtung ist die Steuerung dazu ausgestaltet, das Bearbeitungswerkzeug während seines drehenden und/oder spanabhebenden Eingriffs mit der Stirnfläche des Werkstücks entlang einer Vorschubrichtung relativ zum Werkstück zu bewegen, welche eine Richtungskomponente aufweist, die sich radial zur Werkstückdrehachse erstreckt. Auf diese Art und Weise können jedenfalls sämtliche Flächenabschnitte oder Flächenbereiche der Stirnfläche sukzessive mit dem um die Werkstückdrehachse rotierenden Bearbeitungswerkzeug spanabhebend in Eingriff gelangen. Hierdurch kann eine planare Stirnfläche mit hoher Oberflächengüte und Qualität erzeugt werden.

Nach einer weiteren Ausgestaltung ist ein Kippwinkel zwischen der Werkzeugdrehachse und einer sich transversal zur Werkstückdrehachse erstreckenden Werkstückebene einstellbar. Mittels eines variablen Kippwinkels kann insbesondere der Freiwinkel zwischen der Schneide des Werkzeugs und der zu bearbeitenden Stirnfläche des Werkstücks gezielt und kontrolliert eingestellt werden. Insbesondere kann der Kippwinkel variabel und stufenlos eingestellt werden, etwa durch eine entsprechende Ausrichtung und/oder Positionierung der Werkzeugspindel relativ zur Werkstückspindel.

Nach einer weiteren Ausgestaltung der Vorrichtung ist ein Achsabstand zwischen der Werkzeugdrehachse und der Werkstückdrehachse einstellbar. Der Achsabstand kann insbesondere variabel und stufenlos einstellbar sein. Der Achsabstand kann insbesondere während der spanabhebenden Bearbeitung der Stirnfläche des Werkstücks variiert werden. Er kann insbesondere kontinuierlich variiert werden, sodass etwa für sämtliche, sich durch einen Bearbeitungsradius auszeichnende Flächenbereiche der zu bearbeitenden Stirnfläche des Werkstücks, im Endeffekt gleichbleibende und konstante spanabhebenden Bedingungen, etwa Schnittbedingungen oder Schälbedingungen eingestellt, bzw. eingehalten werden können.

Somit kann bei einer etwa schälenden oder wälzschälenden spanabhebenden Bearbeitung der Stirnfläche des Werkstücks für sämtliche Flächenbereiche der zu bearbeitenden Stirnfläche, welche sich durch unterschiedliche Bearbeitungsradien auszeichnen, etwa gleichbleibende oder annähernd gleichbleibende Schnitt- und/oder mechanische Eingriffsbedingungen eingestellt und aufrecht erhalten werden.

Nach einer weiteren Ausgestaltung der Vorrichtung ist der Achsabstand zwischen der Werkstückdrehachse und der Werkstückdrehachse in Abhängigkeit des Bearbeitungsradius variierbar und/oder einstellbar. Der Achsabstand zwischen der Werkzeugdrehachse und der Werkstückdrehachse kann insbesondere in Abhängigkeit eines variierenden Bearbeitungsradius kontinuierlich variiert werden. Insoweit kann jegliche Änderung des Bearbeitungsradius eine entsprechende Änderung des Achsabstands hervorrufen oder bedingen.

Nach einer weiteren Ausgestaltung ist insoweit, etwa mittels der Steuerung, jedem Bearbeitungsradius der Stirnfläche des Werkstücks ein eindeutiger Achsabstand zwischen der Werkstückdrehachse und der Werkzeugdrehachse zuordenbar, bzw. einstellbar.

Nach einer weiteren Ausgestaltung der Vorrichtung ist ferner vorgesehen, den Achsabstand zwischen der Werkzeugdrehachse und der Werkstückdrehachse mit größer werdendem Bearbeitungsradius ebenfalls zu vergrößern. Auf diese Art und Weise können etwa über die gesamte Stirnfläche oder zumindest über Teilbereiche der zu bearbeitenden Stirnfläche in etwa gleiche Schnittbedingungen im Hinblick auf die Werkzeugbewegung und Werkzeugbewegungsrichtung, die Werkstückbewegung, bzw. Ausrichtung der Werkstückbewegung im Bearbeitungspunkt oder Bearbeitungsbereich des Werkzeugs und die hieraus resultierende Relativbewegung, welche aus einer Abweichung zwischen der Werkzeugbewegungsrichtung und der Werkstückbewegungsrichtung im Bearbeitungspunkt des Werkstücks resultiert, beibehalten, bzw. kontrolliert eingestellt werden.

Für die spanabhebende, etwa für eine schälende spanabhebende Bearbeitung der Stirnfläche des Werkstücks, ist insbesondere ein Achsabstand zwischen der Werkzeugdrehachse und der Werkstückdrehachse in der sich in etwa parallel zur Stirnfläche des Werkzeugs, bzw. senkrecht zur Werkstückdrehachse erstreckenden Ebene vorgesehen. Aus jenem Achsabstand resultiert bei dem um die Werkstückdrehachse rotierenden Werkstück und bei dem um die Werkzeugdrehachse rotierenden Werkzeug eine Schnitt- oder Schälbewegung des Werkzeugs relativ zum Werkstück mit einer Richtungskomponente entlang oder parallel zur Werkzeugdrehachse.

Um jene Relativbewegung bei variierendem Bearbeitungsradius aufrechtzuerhalten ist es vorgesehen und erforderlich, etwa den Achsabstand bei ansteigendem Bearbeitungsradius zu vergrößern, bzw. bei einem kleiner werdenden Bearbeitungsradius zu verringern. Geht der Bearbeitungsradius beispielsweise gegen 0, d.h. wird beispielsweise die Stirnfläche im Bereich eines möglichen Zentrums spanabhebend nach dem hier vorgesehenen Prinzip bearbeitet, so ist der Achsabstand zwischen der Werkstückdrehachse und der Werkzeugdrehachse gleich 0.

Bei einem zunehmenden Bearbeitungsradius, d. h. wenn die drehende Schneide des Bearbeitungswerkzeugs mit einem Bearbeitungsbereich des Werkstücks in Eingriff gelangt, welcher einen vorgegebenen radialen Abstand zur Werkstückdrehachse aufweist, so vergrößert sich der Achsabstand zwischen der Werkstückdrehachse und der Werkzeugdrehachse, um etwa über die gesamte zu bearbeitende Stirnfläche annähernd gleichbleibende Schnittwinkel oder Schnittbedingungen zwischen dem Werkzeug und der Stirnfläche des Werkstücks aufrechtzuerhalten oder beizubehalten.

Nach einer weiteren Ausgestaltung der Vorrichtung ist die Steuerung ferner dazu ausgestaltet, eine Werkzeugdrehzahl der Werkzeugspindel und/oder eine Werkstückdrehzahl der Werkstückspindel in Abhängigkeit des Bearbeitungsradius zu regeln oder zu steuern. Auf diese Art und Weise können, etwa durch die Anpassung entsprechender Drehzahlen von Werkstückspindel und Werkzeugspindel über die zu bearbeitende Stirnfläche des Werkstücks gleichbleibende oder annähernd gleichbleibende Schnitt- oder Schälbedingungen eingestellt, bzw. eingehalten werden.

Hierdurch wird es möglich, trotz variierenden Bearbeitungsradien, d.h. trotz variierendem radialen Abstand zwischen dem Bearbeitungsbereich der Stirnfläche, welcher momentan mit der sich drehenden Schneide des Werkzeugs spanabhebend in Eingriff steht, gleichbleibende oder annähernd gleichbleibende Schnitt- und/oder Schälbedingungen einzuhalten oder aufrecht zu erhalten.

Die mechanischen Beanspruchungen an das Werkzeug können hierbei trotz variierenden Bearbeitungsradius konstant oder annähernd konstant gehalten werden, was sich vorteilhaft auf einen möglichst geringen Werkzeugverschleiß auswirken kann.

Nach einer weiteren Ausgestaltung ist ferner vorgesehen, dass die Steuerung dazu ausgestaltet ist, die Werkzeugdrehzahl mit größer werdendem Bearbeitungsradius zu steigern.

Ergänzend hierzu oder alternativ hierzu kann auch vorgesehen sein, dass die Steuerung dazu ausgestaltet ist, die Werkstückdrehzahl mit größer werdendem Bearbeitungsradius zu verringern. Analog kann natürlich auch bei kleiner werdendem Bearbeitungsradius die Werkzeugdrehzahl verringert werden, mithin bei kleiner werdendem Bearbeitungsradius die Werkstückdrehzahl vergrößert werden.

Es ist hierbei insbesondere vorgesehen, dass eine aus der Umfangsgeschwindigkeit des Werkzeugs und der Drehgeschwindigkeit des Werkstücks im Bearbeitungsbereich resultierende Relativbewegung zwischen Werkzeug und Werkstück sowohl betragsmäßig als auch richtungsmäßig annähernd konstant bleiben, sodass über die gesamte Stirnfläche des zu bearbeitenden Werkstücks annähernd gleichbleibende spanabhebende Schnitt- und/oder Schälbedingungen eingehalten werden können.

Nach einer weiteren Ausgestaltung ist die Steuerung der Vorrichtung dazu ausgestaltet, die Werkzeugdrehzahl und die Werkstückdrehzahl derart aufeinander abzustimmen, dass ein Verhältnis von Werkstückdrehzahl zur Werkzeugdrehzahl dem Verhältnis zwischen Werkzeugradius und Bearbeitungsradius entspricht. Mit anderen Worten kann das Verhältnis von Werkstückdrehzahl zur Werkzeugdrehzahl proportionalen dem Verhältnis zwischen Werkzeugradius und Bearbeitungsradius sein, bzw. die Steuerung kann dazu ausgestaltet sein, ein derart proportionales Wechselverhältnis, während der Bearbeitung der Stirnfläche des Werkstücks einzustellen oder beizubehalten.

Änderungen des Bearbeitungsradius, die sich zwangsläufig für die vollständige Bearbeitung der Stirnfläche des Werkstücks ergeben, haben dementsprechende Auswirkungen auf das Verhältnis von Werkstückdrehzahl zu Werkzeugdrehzahl, da anzunehmen ist, dass der Werkzeugradius während der Bearbeitung der Stirnfläche annähernd konstant bleibt.

Mit anderen Worten hätte eine Verdopplung des Bearbeitungsradius eine Halbierung der Werkstückdrehzahl oder eine Verdopplung der Werkzeugdrehzahl zur Folge. Es ist natürlich auch denkbar, bei einer Veränderung des Bearbeitungsradius beide, d.h. die Werkstückdrehzahl als auch die Werkzeugdrehzahl entsprechend anzupassen, um das oben beschriebene Verhältnis, bzw. die Proportionalität des Verhältnisses von Werkstückdrehzahl zur Werkzeugdrehzahl einerseits zum Verhältnis von Werkzeugradius und Bearbeitungsradius aufrechtzuerhalten.

Nach einer weiteren Ausgestaltung der Vorrichtung ist ferner vorgesehen, dass mittels der Steuerung ein Bearbeitungswinkel α zwischen 5° und 65°, zwischen 10° und 50° oder zwischen 10° und 30° während oder für die Bearbeitung des Werkstücks einstellbar und/oder fixierbar ist. Hierbei gilt insbesondere sin α = a/r, wobei A der Achsabstand zwischen der Werkstückdrehachse und der Werkstückdrehachse und r der Bearbeitungsradius ist, mithin jener radiale Abstand ist, um welchen der momentane Bearbeitungsbereich des Werkstücks, welcher mit dem Werkzeug spanabhebend in Eingriff steht, von der Werkstückdrehachse entfernt ist.

Bei einem Bearbeitungswinkel von 0° würde sich die Umfangsrichtung der Schneide des Werkzeugs in etwa parallel zur Tangentialrichtung des mit dem Werkzeug in Eingriff stehenden Bearbeitungsbereichs der Stirnfläche des Werkstücks erstrecken. Alsdann würde sich keine relative Schnitt- oder Schälbewegung zwischen dem Werkzeug und dem Werkstück ergeben. Bei einem Winkel α von etwa 90° wäre die Werkzeugachse in der Projektion auf die transversale Ebene, d.h. senkrecht zur Werkstückdrehachse, in etwa parallel zur Tangentialrichtung des Bearbeitungsbereich ausgerichtet. Dies wäre mit einer etwa drehenden Bearbeitung der Stirnfläche des Werkstücks vergleichbar, wobei jedoch das Werkzeug ergänzend um seine Werkstückdrehachse gedreht wird.

Nach einer weiteren Ausgestaltung der Bearbeitungsvorrichtung weist das Bearbeitungswerkzeug eine ringförmige oder kreisförmige Schneide auf, deren gedachter Mittelpunkt mit der Werkzeugdrehachse zusammenfällt.

Nach einer weiteren Ausgestaltung kann die Schneide des Bearbeitungswerkzeugs im Wesentlichen zahnlos ausgestaltet sein. Das Bearbeitungswerkzeug kann eine ebene, d.h. erhebungsfreie ringförmige, bzw. kreisförmige Schneide aufweisen.

Insbesondere kann nach einer weiteren Ausgestaltung das Bearbeitungswerkzeug im Wesentlichen scheibenförmig ausgestaltet sein. Es kann ein oder mehrere Schneiden oder zumindest kreissegmentartige Schneidensegmente aufweisen, die jeweils eine gewisse Erstreckung in Umfangs- oder Tangentialrichtung in Bezug auf die Werkzeugdrehachse aufweisen.

Einzelne Schneidensegmente können dabei in Umfangsrichtung des Bearbeitungswerkzeugs aneinander angrenzen. Die Schneide kann insbesondere an einer Umfangskante des scheibenförmigen Bearbeitungswerkzeugs ausgestaltet sein. Typischerweise befindet sich die ring- oder kreisförmige Schneide an einem Außenumfang, insbesondere an einer außenliegende Kante des zum Beispiel scheibenförmigen Bearbeitungswerkzeugs.

Nach einer weiteren Ausgestaltung weist das Bearbeitungswerkzeug in Längsrichtung der Werkzeugdrehachse betrachtet eine erste Stirnfläche auf. Der Außenrand jener ersten Stirnfläche kann mit der ersten Schneide zusammenfallen. Insoweit kann ein Übergang des Außenumfangs oder einer außenliegenden Mantelfläche des Bearbeitungswerkzeugs in die erste Stirnfläche eine die erste Schneide bildende Umfangskante aufweisen oder bilden.

Nach einer weiteren Ausgestaltung weist das Bearbeitungswerkzeug in Längsrichtung der Werkzeugdrehachse betrachtet eine zweite Stirnfläche auf. Diese kann der ersten Stirnfläche abgewandt ausgerichtet sein. Der Außenrand der zweiten Stirnfläche kann dabei ähnlich wie der Außenrand der ersten Stirnfläche mit einer zweiten Schneide zusammenfallen. Das Bearbeitungswerkzeug kann insoweit zumindest eine erste als auch optional eine zweite Schneide aufweisen. Die erste Schneide kann hierbei an einer Umfangskante der ersten Stirnfläche des zum Beispiel scheibenförmigen Werkzeugs ausgestaltet sein. Die zweite Schneide kann an der zweiten Stirnfläche, typischerweise gegenüberliegend der ersten Stirnfläche mit der Umfangskante der zweiten Stirnfläche zusammenfallen oder von dieser im Wesentlichen gebildet werden.

Nach einer weiteren Ausgestaltung weist die erste Schneide ausgehend von der Werkstückdrehachse einen ersten Radius auf. Die zweite Schneide weist ausgehend von der Werkstückdrehachse einen zweiten Radius auf. Der erste Radius und der zweite Radius können dabei unterschiedlich oder im Wesentlichen gleich groß sein. Bei unterschiedlichen Radien von erster Schneide und zweiter Schneide ist es denkbar, dass das Bearbeitungswerkzeug eine zumindest abschnittsweise schräg zur Werkzeugdrehachse verlaufende Außenfläche zwischen der ersten Schneide und der zweiten Schneide aufweist. Jene Außenfläche kann beispielsweise konisch ausgestaltet sein.

Eine derart konische Ausgestaltung ermöglicht insbesondere die Implementierung eines vorgegebenen positiven oder negativen Freiwinkels bei der spanabhebenden Bearbeitung der rotierenden Stirnfläche des Werkstücks. Mit größer werdendem Freiwinkel zwischen der jeweils mit der rotierenden Stirnfläche in Eingriff stehenden Schneide und der Werkstückoberfläche kann die Reibung zwischen dem Bearbeitungswerkzeug und der zu bearbeitenden Stirnfläche des Werkstücks als auch der Freiflächenverschleiß des Bearbeitungswerkzeugs reduziert werden.

Ein entsprechender Freiwinkel kann aber auch dynamisch, etwa durch Einstellung eines vorgegebenen Achskreuzwinkels oder Kippwinkels zwischen der Werkstückdrehachse und der Werkstückdrehachse eingestellt werden.

Nach einer weiteren Ausgestaltung der Vorrichtung ist die Schneide des Bearbeitungswerkzeugs in Bezug auf die Werkzeugdrehachse in Umfangsrichtung ununterbrochen ausgestaltet. Die Schneide, d.h. die erste Schneide und/oder die zweite Schneide können eine ununterbrochene Umfangskante bilden oder aufweisen, sodass bei der spanabhebenden Bearbeitung der rotierenden Stirnfläche des Werkstücks am Werkzeug vergleichsweise homogene Belastungen und ein reduzierter Wärmeeintrag in das Werkzeug erzielt werden können.

Nach einer weiteren Ausgestaltung weist die Schneide des Bearbeitungswerkzeugs in Umfangsrichtung betrachtet zumindest eine spanbrechende Kerbe oder Nut auf. Eine solche Nut kann als Vertiefung in der ansonsten kreis- oder ringförmigen Schneide gebildet sein. Die entsprechende Kerbe oder Nut sorgt dafür, dass die von der Stirnfläche des rotierenden Werkstücks abgetragene Späne eine gewisse Spanlänge nicht überschreiten. Gelangt die Kerbe oder Nut des Bearbeitungswerkzeugs mit der Stirnfläche des Werkstücks spanabhebend in Eingriff führt dies zwangsläufig zu einer Unterbrechung des von der Stirnfläche des Werkstücks abgetragenen oder abgeschnittenen Spans.

Nach einer weiteren Ausgestaltung kann sich die spanbrechende Kerbe oder Nut in Axialrichtung von der ersten Schneide durchgehend bis zur zweiten Schneide entlang dem Außenumfang des Bearbeitungswerkzeugs erstrecken. Die Kerbe oder Nut kann insoweit eine Längserstreckung oder Axialerstreckung aufweisen, die dem axialen Abstand zwischen der ersten Schneide und der zweiten Schneide im Wesentlichen entspricht. In Umfangsrichtung der kreisförmige Schneide können ein oder mehrere spanbrechende Kerben oder Nuten ausgebildet oder vorgesehen sein. Ist mehr als eine spanbrechende Kerbe oder Nut an der zumindest eine Schneide ausgebildet, so sind diese typischerweise in Umfangsrichtung der Schneide äquidistant zueinander angeordnet. Dies führt zu einer gleichmäßigen, bzw. stets gleichbleibenden Länge der von der Stirnfläche abgetragenen Späne.

In einem weiteren Aspekt betrifft die vorliegende Erfindung ferner ein Verfahren zur spanabhebenden Bearbeitung eines Werkstücks. Hierbei wird ein spanabhebendes Bearbeitungswerkzeug um eine Werkstückdrehachse rotierend angetrieben. Das Bearbeitungswerkzeug weist dabei zumindest eine sich zumindest abschnittsweise tangential zur Werkzeugdrehachse erstreckende und um die Werkstückdrehachse rotierende Schneide auf. Die Schneide kann rotationssymmetrisch ausgestaltet sein. Sie kann insbesondere kreisrund ausgestaltet sein. Bei dem Verfahren wird ferner ein Werkstück, etwa ein rotationssymmetrisches Werkstück, um eine Werkstückdrehachse rotierend angetrieben. Das Werkstück weist eine sich transversal zur Werkstückdrehachse erstreckende Stirnfläche auf. Die Stirnfläche ist die Bearbeitungsfläche des Werkstücks, welche mit dem Bearbeitungswerkzeug spanabhebend bearbeitet wird.

Nach dem Verfahren ist ferner vorgesehen, eine Position der Werkzeugdrehachse relativ zur Werkstückdrehachse und/oder relativ zur Stirnfläche des Werkstücks einzustellen und/oder zu variieren, um die Schneide des Bearbeitungswerkzeugs spanabhebend mit einem Bearbeitungsbereich der Stirnfläche des Werkstücks in Eingriff zu bringen. Bei der spanabhebenden Bearbeitung des Werkstücks unterliegen beide, d.h. die Stirnfläche des Werkstücks als auch das Bearbeitungswerkzeug einer Rotation, bzw. Drehbewegung. Das Bearbeitungswerkzeug rotiert dabei um die Werkzeugdrehachse. Das Werkstück rotiert um die Werkstückdrehachse.

Das Verfahren ist insbesondere mit einer zuvor beschriebenen Vorrichtung zur spanabhebenden Bearbeitung eines Werkstücks ausführbar und/oder durchführbar. Insoweit gelten sämtliche, im Hinblick auf die zuvor beschriebene Vorrichtung beschriebenen Merkmale, Wirkungen und Vorteile gleichermaßen auch für das Verfahren zur spanabhebenden Bearbeitung eines Werkstücks; und umgekehrt.

Nach einer Weiterbildung des Verfahrens ist vorgesehen, einen radialen Abstand zwischen dem Bearbeitungsbereich der Stirnfläche des Werkstücks, mit welchem das Werkzeug spanabhebend in Eingriff steht, und der Werkstückdrehachse während der spanabhebenden Bearbeitung der Stirnfläche als Bearbeitungsradius variabel einzustellen. Jener radiale Abstand, d.h. der Bearbeitungsradius, ein Flächensegment oder Flächenbereich der Stirnfläche des Werkstücks, welcher momentan mit der rotierenden Schneide des Bearbeitungswerkzeugs spanabhebend, etwa schneidend oder schälend in Eingriff steht, wird variabel eingestellt. Der Bearbeitungradius kann insbesondere stufenlos während der Bearbeitung der Stirnfläche des Werkstücks eingestellt und/oder variiert werden. Auf diese Art und Weise kann die gesamte Stirnfläche des Werkstücks spanabhebend bearbeitet werden.

Nach einer weiteren Ausgestaltung des Verfahrens wird ein Achsabstand zwischen der Werkzeugdrehachse und der Werkstückdrehachse während der spanabhebenden Bearbeitung der Stirnfläche eingestellt und/oder variiert. Der Achsabstand kann insbesondere stufenlos und/oder kontinuierlich, insbesondere mit oder infolge einer Veränderung des Bearbeitungsradius variiert oder eingestellt werden. Auf diese Art und Weise können für unterschiedliche Bearbeitungsradien annähernd gleichbleibende spanabhebende Schnitt- und/oder Schälbedingungen zwischen der zu bearbeitenden Stirnfläche und dem Werkzeug eingestellt oder beibehalten werden.

Nach einer weiteren Ausgestaltung des Verfahrens wird der Achsabstand zwischen der Werkzeugdrehachse und der Werkstückdrehachse in Abhängigkeit des Bearbeitungsradius variiert und/oder eingestellt. Hierbei ist insbesondere vorgesehen, den Achsabstand zwischen der Werkzeugdrehachse und der Werkstückdrehachse mit größer werdendem Bearbeitungsradius zu vergrößern, bzw. den Achsabstand zwischen der Werkzeugdrehachse und der Werkstückdrehachse mit kleiner werdendem Bearbeitungsradius zu reduzieren.

Nach einem weiteren Aspekt ist ferner ein Computerprogramm oder Computerprogrammprodukt vorgesehen. Dieses umfasst Befehle, die bei der Ausführung des Programms durch eine zuvor beschriebene Steuerung der zuvor beschriebenen Bearbeitungsvorrichtung diese veranlassen das zuvor beschriebene Verfahren zur spanabhebenden Bearbeitung des Werkstücks durchzuführen. Insoweit gelten sämtliche zuvor beschriebenen Merkmale, Effekte Vorteile und Wirkungen, wie sie zuvor in Bezug auf die Vorrichtung, das Bearbeitungswerkzeug oder das Verfahren beschrieben wurden auch gleichermaßen für das Computerprogramm oder Computerprogrammprodukt. Das Computerprogramm kann als herunterladbare Software oder auch als Datenträger, mithin als Speichermedium vorliegen.

Weitere Ziele, Merkmale sowie Vorteile der vorliegenden Erfindung werden nachfolgend unter Bezugnahme auf die Zeichnungen erläutert. Hierbei bilden nicht nur die explizit in den Zeichnungen illustrierten und konkret beschriebenen sondern auch sämtliche sinnvoll und technisch miteinander kombinierbaren Merkmale den Gegenstand der vorliegenden Erfindung. Hierbei zeigen:
- Fig. 1: eine schematische Darstellung eines Beispiels des mit der Stirnfläche des Werkstücks in Eingriff stehenden Bearbeitungswerkzeugs,
- Fig. 2: eine Draufsicht auf die Konfiguration gemäß Fig. 1 von oben,
- Fig. 3: eine Seitenansicht der Konfiguration gemäß der Figuren 1 und 2,
- Fig. 4: eine schematische Darstellung eines Ausführungsbeispiels eines Bearbeitungswerkzeugs,
- Fig. 5: eine schematische Darstellung eines weiteren Ausführungsbeispiels eines Bearbeitungswerkzeugs, und
- Fig. 6: eine schematische Darstellung der Vorrichtung zur spanabhebenden Bearbeitung des Werkstücks.

### Detaillierte Beschreibung

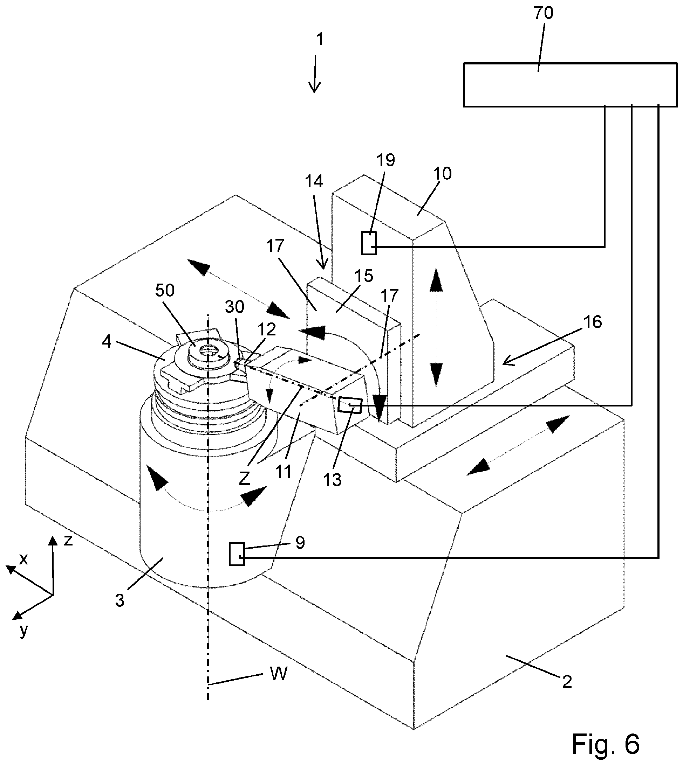

In Fig. 6 ist eine Ausführungsform einer erfindungsgemäßen Vorrichtung 1 zur Verzahnung eines Werkstücks 5 gezeigt. Die Vorrichtung 1 ist als spanabhende Bearbeitungsvorrichtung ausgestaltet. Sie weist eine Basis 2 und einen Werkstückträger 3 auf. Der Werkstückträger 3 ist an der ortsfesten Basis 2 angeordnet. An dem Werkstückträger 3 ist eine Werkstückspindel 4 drehbar angeordnet. Die Werkstückspindel 4 ist bezüglich einer Werkstückdrehachse W drehbar, insbesondere mittels eines Antriebs, etwa eines Spindelantriebs 9 drehbar antreibbar. Der Spindelantriebe 9 ist typischerweise mit einer Steuerung 70 signaltechnisch gekoppelt. Hierdurch kann die Werkstückspindel 4 kontrolliert und regelbar gedreht werden. An der Werkstückspindel 4 ist ein Werkstück 50 lösbar befestigbar, bzw. einspannbar. Mittels der drehbaren Lagerung der Werkstückspindel 4 kann das Werkstück 50 bezüglich der ersten Werkstückdrehachse W für die Zwecke der spanenden Werkstückbearbeitung gedreht werden.

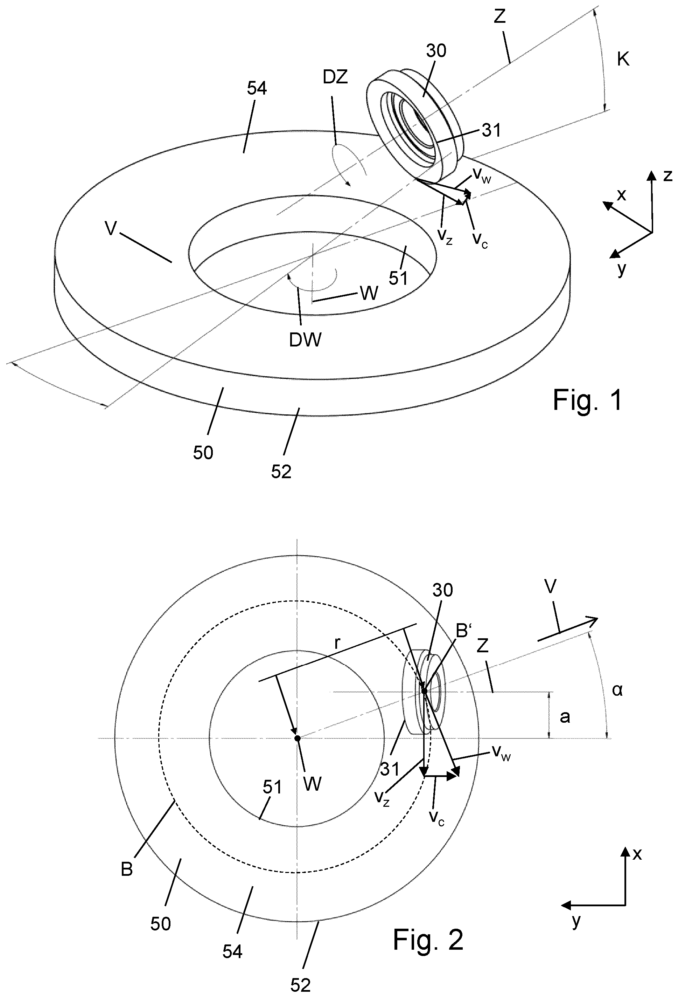

Die Vorrichtung 1 weist ferner einen Bearbeitungskopf 11 auf. An dem Bearbeitungskopf 11 ist eine Werkzeugspindel 12 bezüglich einer Werkzeugdrehachse Z drehbar gelagert. Die Werkzeugspindel 12 dient der lösbaren Aufnahme entsprechender Bearbeitungswerkzeuge 30 wie diese beispielsweise im Detail in den Fig. 1 bis 5 gezeigt sind.

Der Bearbeitungskopf 11 kann zur Durchführung einer spanabhebenden Bearbeitung Stirnfläche 54 des Werkstücks 50 ausgebildet sein. Der Bearbeitungskopf 11, mithin das daran drehbar angeordnete Bearbeitungswerkzeug 30, kann hinsichtlich seiner Position und/oder Ausrichtung von der Steuerung 70 kontrolliert und vorzugsweise stufenlos verstellbar angesteuert werden. Der Bearbeitungskopf 11 ist grundsätzlich frei und stufenlos positionierbar sowie hinsichtlich mehrerer Bewegungsfreiheitsgrade relativ zur Werkstückdrehachse Z ausrichtbar.

Der Bearbeitungskopf 11 ist hierbei über eine Positioniereinrichtung 14 verschiebbar zumindest bezüglich einer ersten Richtung (x) an einem Träger 10 gelagert. Der Träger 10 selbst ist typischerweise über eine weitere Positioniereinrichtung 16, z.B. entlang einer weiteren Richtung (y) an der Basis 2 gelagert. Die genannten Positioniereinrichtungen 14, 16 können insbesondere mit einem Antrieb, typischerweise mit einem elektrischen Antrieb versehen sein, mittels welchem der Träger 10 als auch die Positioniereinrichtungen 14 und damit der Bearbeitungskopf 11 unabhängig voneinander relativ zur Basis 2 entlang einer oder mehrerer Richtungen (x, y, z) mittels der Steuerung 70 bewegt werden können.

Die Steuerung 70 ist insbesondere mit den genannten elektrischen Antrieben gekoppelt, um eine entsprechend geforderte Bewegung oder Ausrichtung des Bearbeitungskopfs 11 relativ zur Basis 2, insbesondere relativ zum an der Werkstückspindel 4 gelagerten Werkstück 30 zu verwirklichen. Die Positioniereinrichtungen 14, 16 können eine ein oder zweidimensionale Schiebeführung aufweisen, mittels welchen der Träger 10 und/oder der Bearbeitungskopf 11 entlang einer oder mehrerer Freiheitsgrade (x, y, z) bewegt werden können.

Insbesondere kann der Bearbeitungskopf 11 mittels der Positioniereinrichtung 14 bezüglich einer ersten Richtung, (x) und bezüglich einer dritten Richtung (z) längsverschieblich am Träger 10 gelagert sein. Die Positioniereinrichtung 14 kann hierbei jeweils einen, beispielsweise am Träger 10 angeordneten Schlitten 15 aufweisen. Der Schlitten 15 kann als Kreuzschlitten implementiert oder ausgebildet sein, sodass der Bearbeitungskopf 11 bezüglich der ersten Richtung (x) und optional auch bezüglich der dritten Richtung (z) verfahrbar, bzw. verschiebbar am Träger 10 gelagert ist. Der Träger 10 kann daselbst mittels der Positioniereinrichtung 16 etwa entlang der zweiten Richtung (y) relativ zur Basis 2 bedarfsgerecht bewegt, bzw. positioniert werden.

Eine signaltechnische Verbindung zwischen der zentralen Steuerung 70 mit dem Positioniereinrichtungen 14, 16 ist vorliegend nicht explizit dargestellt. Aus Gründen der Übersichtlichkeit ist auch der wechselseitige Eingriff von Führungsschienen etwa des Schlittens 15 der Positioniereinrichtungen 14, 16 nicht explizit gezeigt.

Der Bearbeitungskopf 11 ist ferner bezüglich einer ersten Schwenkachse 17 drehbar, bzw. schwenkbar an dem Träger 10 und damit auch relativ zur Basis 2 verschwenkbar gelagert. Mittels der drehbaren, bzw. schwenkbaren Lagerung bezüglich der Schwenkachse 17 kann die Werkzeugdrehachse Z relativ zur Werkstückachse W variabel und bedarfsgerecht verändert und eingestellt werden.

Dies ermöglicht letztlich eine freie Positionierbarkeit und Ausrichtbarkeit des Bearbeitungskopfs 11, und damit auch des Bearbeitungswerkzeugs 30 relativ zur Basis 2, insbesondere relativ zum drehbar an der Basis gelagerten Werkstück 50. Die Schwenkachse 17 ist typischerweise mit einem eigenen Antrieb versehen, welcher signaltechnisch mit der Steuerung 70 verbunden ist. Eine Dreh- bzw. Schwenkbewegung des Bearbeitungskopf 11 kann insoweit von der Steuerung 70 kontrolliert werden.

Stellvertretend für die Vielzahl möglicher Antriebe ist in Fig. 6 lediglich eine Antriebseinheit 19 des Bearbeitungskopf 11 dargestellt, die signaltechnisch mit der Steuerung 70 verbunden ist. Die Antriebseinheit 19 steht stellvertretend für sämtliche Antriebe des Trägers 10 sowie des Bearbeitungskopfs 11, um diese in jedwede geforderte Position oder Ausrichtung zu überführen und/oder mit geforderten Geschwindigkeiten während des Bearbeitungsprozesses zu bewegen.

Auch die Spindelantriebe 9, 13 sind signalübertragend mit der Steuerung 70 verbunden. Die Steuerung 70 kann somit die Drehzahlen der Werkstückspindel 4 und der Werkzeugspindel 12 bedarfsgerecht regeln und steuern.

In den Figuren 1 bis 3 ist der wechselseitige Eingriff des Bearbeitungswerkzeugs 30 mit einer zu bearbeitenden Stirnfläche 54 des Werkstücks 50 detailliert gezeigt. Das Werkstück 50 ist bezüglich der Werkstückdrehachse W drehbar gelagert. Das Bearbeitungswerkzeug 30 ist bezüglich einer Werkzeugdrehachse Z drehbar gelagert. Die Werkzeugdrehachse Z ist in einem vorgegebenen Achsabstand a zur Werkstückdrehachse W angeordnet.

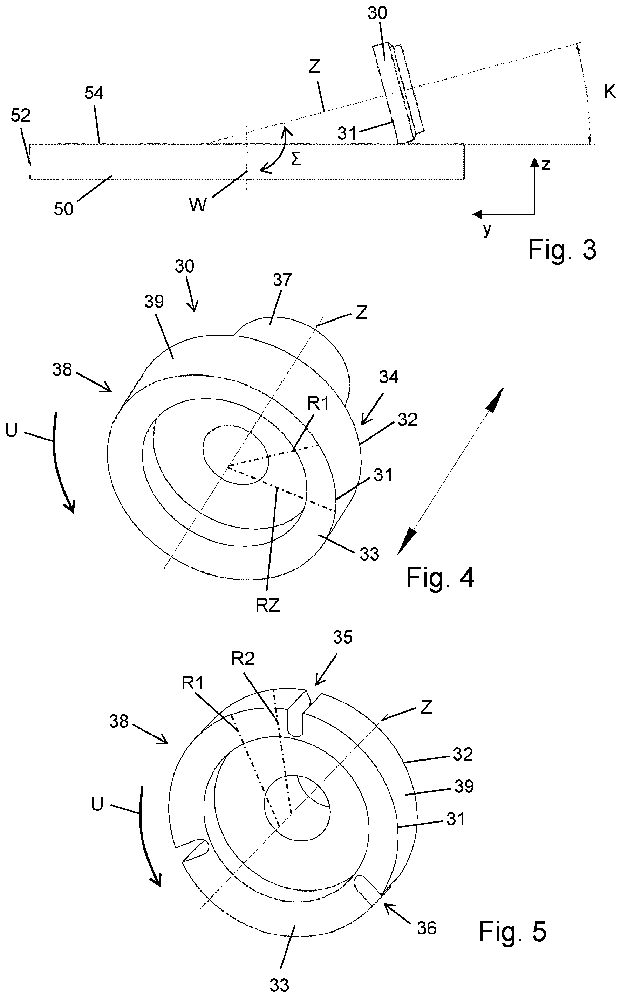

Das in den Figuren 4 und 5 isoliert gezeigte Bearbeitungswerkzeug 30 weist eine erste Schneide 31 und eine zweite Schneide 32 auf. Die Schneiden 31, 32 erstrecken sich zumindest abschnittsweise tangential zur Werkzeugdrehachse Z, die mit einer Längsachse des in Fig. 3 gezeigten Schafts 37 des Bearbeitungswerkzeugs 30 zusammenfällt. Wenn das Werkzeug 30 bestimmungsgemäß an der Werkzeugspindel 12 gehalten oder befestigt ist, fällt die Längsachse des Schafts 37 mit der Werkzeugdrehachse Z zusammen.

Das Bearbeitungswerkzeug 30 weist einen gegenüber dem längserstreckten Schaft 37 radial erweiterten Kopf 38 auf. Der Kopf 38 weist eine dem Schaft 37 abgewandte distale Stirnfläche 33 und eine der distalen Stirnfläche 33 abgewandte proximale Stirnfläche 34 auf. Zwischen den Stirnfläche 33, 34 erstreckt sich eine vorliegend zylindrisch ausgestaltete Mantelfläche 39. Diese verläuft im Wesentlichen parallel zur Werkzeugdrehachse Z. Bei anderen Ausführungsformen kann die Mantelfläche 39 auch unter einem Winkel relativ zur Längsachse des Bearbeitungswerkzeugs 30 verlaufen. Im Übergang zwischen der seitlichen Mantelfläche 39 und der distalen oder ersten Stirnfläche 33 ist eine umlaufende kreisförmige Schneide 31 gebildet, welche vorliegend als erste Schneide bezeichnet ist. Gegenüberliegend und im Übergang von der Mantelfläche 39 in die proximale oder zweite Stirnfläche 34 kann eine optionale zweite umlaufende Schneide 32 gebildet sein.

Die Schneiden 31, 32 verlaufen in einer sich senkrecht zur Längserstreckung des Schafts 37 erstreckenden Ebene. Sie sind typischerweise frei von Verzahnungen und weisen keinerlei radiale Erhebungen auf. Die Schneiden 31, 32 bewirken einen gleichmäßig schälenden, bzw. schneidenden spanabhebenden Abtrag von der Stirnfläche 54 und/oder von einer der außenliegenden oder innenliegenden Mantelflächen 51, 52 des zu bearbeitenden Werkstücks 50.

Bei der in den Figuren 4 und 5 gezeigten Darstellung des Bearbeitungswerkzeugs 30 ist der zweite Außenradius R2 der zweiten Schneide 32 in etwa gleich dem ersten Außenradius R1 der ersten Schneide 31. Dies bedingt eine im Wesentlichen zylindrische Mantelfläche 39. Bei anderen Ausgestaltungen des Bearbeitungswerkzeugs 30 können jene Radien R1, R2 auch unterschiedlich groß sein. Alsdann kann sich eine in etwa konisch oder anderweitig von der zylindrischen Form abweichende Mantelfläche 39 für das Bearbeitungswerkzeug ergeben.

Für die spanabhebenden Bearbeitung des rotierenden Werkstück 50 ist insbesondere vorgesehen, dass das mit seiner ununterbrochenen und typischerweise umlaufenden Schneide 31, 32 ausgestaltete Bearbeitungswerkzeug 30 spanabhebend mit der ebenfalls rotierenden Stirnfläche 54 des Werkstücks 50 in Eingriff gelangt. Während der Bearbeitung ist ferner vorgesehen, dass das Bearbeitungswerkzeug 30 relativ zur ebenen Stirnfläche 54 entlang einer Vorschubrichtung V relativ zum Werkstück 50 bewegt wird. Die Vorschubrichtung V erstreckt sich hierbei etwa radial zur Werkstückdrehachse W. Auf diese Art und Weise fährt das rotierende Bearbeitungswerkzeug 30 in Radialrichtung auf der rotierenden Stirnfläche 54 entlang.

Im Unterschied zu einer rein drehenden spanabhebenden Bearbeitung mit einem Drehmeißel rotiert das hier vorgesehene Bearbeitungswerkzeug 30 um seine Werkzeugdrehachse Z, sodass bei der fortwährenden Bearbeitung der Stirnfläche 54 in aufeinanderfolgenden Momenten oder Zeitpunkten der Bearbeitung jeweils in Umfangsrichtung der Schneide 31 aneinander angrenzende Schneidensegmente mit der zu bearbeitenden Stirnfläche 54 in Eingriff gelangen. Auf diese Art und Weise kann eine effektive Schneidenlänge auf den Umfang der ringförmigen Schneide 31, 32 vergrößert werden. Eine mechanische Beanspruchung als auch thermische Beanspruchung des Bearbeitungswerkzeugs 30 verteilt sich somit auf den gesamten Außenumfang der Schneide, 31, 32, mithin auf die gesamte Schneidkante.

Bei der Ausgestaltung eines Bearbeitungswerkzeugs gemäß Fig. 4 sind die Schneiden 31, 32 ebenfalls im Wesentlichen kreisförmig und ununterbrochen ausgestaltet. Es sind hierbei ferner einzelne spanbrechende Kerben oder Nuten 35, 36 im Bereich der Schneiden 31, 32, etwa entlang dem Außenumfang des Kopfs 38 des Bearbeitungswerkzeugs 30 vorgesehen. Der Abstand der einzelnen Nuten 35, 36 in Umfangsrichtung U definiert die Länge der abzutragenden Späne.

Die bahnbrechenden Kerben oder Nuten 35, 36 können sich durchgängig von der ersten Schneide 31 bis zur zweiten Schneide 32 erstrecken. Es ist aber auch denkbar, dass die erste Schneide 31 und die zweite Schneide 32 jeweils unterschiedliche Kerben oder Nuten 35, 36 aufweisen, die in Umfangsrichtung U versetzt zueinander an den jeweiligen Schneiden 31, 32 ausgebildet sind.

Für die Bearbeitung der Stirnfläche 54 des Werkstücks 50, wie dies in Fig. 1 dargestellt ist, steht die von der Schneide 31 gebildete Außenkante des Kopfs 38 des Bearbeitungswerkzeugs 30 mit der Oberfläche der Stirnfläche 54, und insbesondere mit einem Bearbeitungsabschnitt B des Werkstücks 50 in Eingriff. Es ist hierbei vorgesehen, dass das Bearbeitungswerkzeug 30 und das Werkstück 50 gleichläufig rotierend angetrieben werden.

Der Werkzeugradius RZ definiert den radialen Abstand zwischen der Schneide 31 und der Werkzeugdrehachse Z.

Der Bearbeitungsbereich B, mithin ein Bearbeitungspunkt B', in welchem die Schneide 31 mit der Stirnfläche 54 in Eingriff steht, kann einen vorgegebenen radialen Abstand, mithin einen Bearbeitungsradius r von der Werkstückdrehachse W aufweisen, wie dies insbesondere in Fig. 2 gezeigt ist. Bei der angetriebenen Drehbewegung des Werkstücks 50 um die Werkstückdrehachse W ergibt sich ein in Fig. 2 strichliniert dargestellter kreisförmiger Bearbeitungsbereich B, in welchem oder entlang welchem die Schneide 31 des Bearbeitungswerkzeugs 30 infolge der rotierenden Bewegung des Werkstücks 30 spanabhebend mit der Stirnfläche 54 in Eingriff steht.

Gleichzeitig rotiert auch das Bearbeitungswerkzeug 30 um die Werkstückdrehachse Z. Durch jene Drehbewegung ergibt sich im Bearbeitungspunkt B' oder entlang des kreisförmigen Bearbeitungsbereich B eine Umfangsgeschwindigkeit des Werkzeugs v_{w}, welche im Bearbeitungspunkt B' tangential zum kreisförmigen Bearbeitungsbereich B ausgerichtet ist. Es ergibt sich ferner eine Umfangsgeschwindigkeit v_{z} der Schneide 31 des Werkzeugs 30, welche in Bezug auf die Schneide 31 im Bearbeitungspunkt B' tangential zum Bearbeitungsbereich B ausgerichtet ist.

Durch den Achsabstand a zwischen der Werkstückdrehachse W und der Werkzeugdrehachse Z sind die Umfangsdrehgeschwindigkeiten v_{z} und v_{w} nicht parallel zueinander ausgerichtet. Hieraus resultiert eine Schnittgeschwindigkeit v_{c} der Schneide 31, mithin des Werkzeugs 30 relativ zur zu bearbeitenden Stirnfläche 54, wobei die Richtung der Schnittgeschwindigkeit v_{c}, bzw. die entsprechende Schnittrichtung durch die unterschiedlichen Richtungen der Umfangs- und/oder Umlaufgeschwindigkeiten v_{z} und v_{w} vorgegeben ist.

Sind die beiden Geschwindigkeiten v_{z} und v_{w} betragsmäßig etwa gleich groß, kann von einer Art schälenden und/oder rein schneidenden Bearbeitung der Stirnfläche 54 durch das Bearbeitungswerkzeug 30 gesprochen werden. Das Werkzeug 30 dreht alsdann quasi schlupffrei zur Drehung der Stirnfläche 54 des Werkstücks 50. Es ist grundsätzlich aber auch denkbar und vorgesehen, dass die Geschwindigkeiten v_{z} und v_{w} betragsmäßig unterschiedlich sind, sodass quasi ein gewisser Schlupf zwischen dem drehenden Werkzeug 30 und dem sich drehenden Werkstück 50 bei der Bearbeitung der Stirnfläche 54 gegeben ist.

Wie insbesondere anhand der Fig. 3 erkennbar ist, kann die Werkzeuggeometrie einen kinematischen Freiwinkel aufweisen oder bilden. Die Werkzeugdrehachse Z kann gegenüber der Werkstück Drehachse W, insbesondere auch gegenüber der Ebene der Stirnfläche 54, bzw. relativ zur Transversalebene (x, y), welche sich senkrecht zur Werkstückachse W erstreckt gekippt oder geneigt ausgerichtet sein. Der entsprechende Kippwinkel K kann durch eine entsprechende Neigung der Werkstückspindel 4 gegenüber der Werkzeugspindel 12 beliebig und vorzugsweise stufenlos eingestellt werden.

In der Draufsicht gemäß der Figuren 2 ist ferner erkennbar, dass das Werkzeug 30 etwa im Zuge der Bearbeitung der Stirnfläche 54 entlang einer Vorschubrichtung V relativ zum Werkstück 30 in Radialrichtung bewegt wird. Die entsprechende Bewegung entlang der Radialrichtung in Bezug auf das radiale Zentrum der Werkstückdrehachse W bewirkt einen sich etwa kontinuierliche verändernden Achsabstand a während der Bearbeitung der Stirnfläche 54.

Es ist hierbei insbesondere vorgesehen, dass die Steuerung 70 die Werkzeugdrehzahl DZ und die Werkstückdrehzahl DW derart aufeinander abstimmt oder aneinander anpasst, dass eine Geschwindigkeitskomponente v_{c} über die gesamte Bearbeitung der gesamten Stirnfläche 54 etwa betragsmäßig konstant erhalten bleibt.

Insoweit kann die Steuerung 70 dazu ausgestaltet sein, die Werkstückdrehzahl DW mit größer werdendem Bearbeitungsradius r zu verringern, bzw. die Werkzeugdrehzahl DZ mit größer werdendem Bearbeitungsradius zu steigern oder zu erhöhen. Gleichermaßen kann vorgesehen sein, bei einem sich verändernden Bearbeitungsradius r, welcher sich infolge einer kontinuierlichen Bewegung des Werkzeugs 30 in Radialrichtung r oder entlang der Vorschubrichtung V relativ zur Werkstückdrehachse W ergibt, sowohl die Werkzeugdrehzahl DZ als auch die Werkstückdrehzahl DW entsprechend aneinander anzupassen.

Bei der vorliegend gezeigten Ausführungsform der Vorrichtung 1 kann, wie insbesondere in Fig. 3 dargestellt, ein Achskreuzwinkel Σ vorgesehen oder eingestellt sein, welcher zwischen der Werkstückdrehachse Z und der Werkstückdrehachse W liegt oder hierzwischen gebildet wird. Bei einem theoretischen Kippwinkel K gleich 0° würde sich die Werkzeugdrehachse Z in etwa senkrecht zur Werkstückdrehachse W erstrecken.

Die Werkstückdrehachse Z wäre alsdann parallel zur Transversalebene (x, y) der Werkstückdrehachse W ausgerichtet. Im Zuge der Bearbeitung der Stirnfläche 54 kann insbesondere ein konstanter Achskreuzwinkel Σ eingestellt sein und beibehalten werden. Auf diese Art und Weise kann ein konstanter Freiwinkel oder Kippwinkel K zwischen der Schneide 31 des Werkzeugs 30 und der zu bearbeitenden Stirnfläche 54 eingehalten oder beibehalten werden.

Wie insbesondere aus dem Diagramm oder der schematischen Darstellung gemäß Fig. 2 weiter hervorgeht, kann bei größer werdendem Achsabstand a die Umfangsgeschwindigkeit v_{w} des Bearbeitungsbereichs B richtungsmäßig weiter vom der Richtung der Umfangsgeschwindigkeit v_{z} des Bearbeitungswerkzeugs 30 abweichen, sodass sich mit größer werdendem Achsabstand a und einem hiermit einhergehend größer werdenden Bearbeitungswinkel α sich eine betragsmäßig größere Schnittgeschwindigkeit v_{c} ergibt. Diese wäre bei einem Bearbeitungswinkel α = 90° maximal, wobei dann der Achsabstand a dem Außenradius r zwischen der äußeren Mantelfläche 52 und der Werkstückdrehachse W entspräche.

Typischerweise und bei bevorzugten Ausführungsformen beträgt der Winkel α zwischen 5° und 65°, zwischen 10° und 50° oder zwischen 10° und 30°. Bei derartigen Winkelbereichen kann ein vergleichsweise geringer Werkzeugverschleiß mit gleichzeitig guten Bearbeitungsergebnissen für die Stirnfläche 54 erzielt werden.

Wenn insbesondere das Verhältnis von Werkstückdrehzahl DW zur Werkzeugdrehzahl DZ dem Verhältnis von Werkzeugradius RZ zum Bearbeitungsradius B entspricht kann das Bearbeitungswerkzeug 30 zumindest im Hinblick auf die Drehbewegung des Werkstücks 50, bzw. in Bezug auf die Umfangsrichtung des Werkstücks 50 quasi schlupffrei mit diesem in Eingriff stehen. Ein spanabhebender Materialabtrag ergibt sich dabei überwiegend oder ausschließlich durch eine Radialkomponente der Schneidbewegung des Bearbeitungswerkzeugs 30 relativ zur Stirnfläche 54 im Bearbeitungspunkt B'. Auf diese Art und Weise kann die Materialbeanspruchung für das Bearbeitungswerkzeug weiter reduziert werden. Reibung zwischen dem Bearbeitungswerkzeug und der zu bearbeitenden Stirnfläche kann in vorteilhafter Weise ebenfalls reduziert werden.

### Bezugszeichenliste

- 1: Bearbeitungsvorrichtung
- 2: Basis
- 3: Werkstückträger
- 4: Werkstückspindel
- 9: Spindelantrieb
- 10: Träger
- 11: Bearbeitungskopf
- 12: Werkzeugspindel
- 13: Spindelantrieb
- 14: Positioniereinrichtung
- 15: Schlitten
- 16: Positioniereinrichtung
- 17: Schwenkachse
- 18: Werkzeugachse
- 19: Antriebseinheit
- 30: Bearbeitungswerkzeug
- 31: Schneide
- 32: Schneide
- 33: Stirnfläche
- 34: Stirnfläche
- 35: Nut
- 36: Nut
- 37: Schaft
- 38: Kopf
- 39: Mantelfläche
- 50: Werkstück
- 51: Mantelfläche
- 52: Mantelfläche
- 54: Stirnfläche
- 70: Steuerung
- a: Achsabstand
- B: Bearbeitungsradius
- DW: Werkstückdrehzahl
- DZ: Werkzeugdrehzahl
- RZ: Werkzeugradius
- V: Vorschubrichtung
- U: Umfangsrichtung
- W: Werkstückdrehachse
- Z: Werkzeugdrehachse
- Σ: Achskreuzwinkel
- R1, R2: Radius

## Patentansprüche

1. Vorrichtung (1) zur spanabhebenden Bearbeitung eines Werkstücks (50), mit:
- einer Werkzeugspindel (12) zur Aufnahme und drehbaren Lagerung eines spanabhebenden Bearbeitungswerkzeugs (30) um eine Werkzeugdrehachse (Z),
- einer Werkstückspindel (4) zur Aufnahme und drehbaren Lagerung eines Werkstücks (50) um eine Werkstückdrehachse (W), wobei das Werkstück (W) eine mittels des Bearbeitungswerkzeugs (30) zu bearbeitende und sich transversal zur Werkstückdrehachse (W) erstreckende Stirnfläche (54) aufweist,
- wobei eine Ausrichtung und eine Position der Werkzeugdrehachse (Z) relativ zur Werkstückdrehachse (W) und/oder relativ zur Stirnfläche (54) des Werkstücks (50) einstellbar ist,
- einer mit der Werkzeugspindel (12) und mit der Werkstückspindel (4) gekoppelten Steuerung (70), welche dazu ausgestaltet ist, eine sich zumindest abschnittsweise tangential zur Werkzeugdrehachse (Z) erstreckende und um die Werkzeugdrehachse (Z) rotierende Schneide (31, 32) eines mittels der Werkzeugspindel (12) drehbar angetriebenen Bearbeitungswerkzeugs (30) mit einem Bearbeitungsbereich (B) der Stirnfläche (54) des sich um die Werkstückachse (W) drehenden Werkstücks (50) spanabhebend in Eingriff zu bringen.

2. Vorrichtung (1) nach Anspruch 1, wobei ein radialer Abstand zwischen dem Bearbeitungsbereich (B) der Stirnfläche (54) des Werkstücks (50), mit welchem das Werkzeug (Z) spanabhebend in Eingriff steht oder in Eingriff bringbar ist, und der Werkstückdrehachse (W) als Bearbeitungsradius (r) variabel einstellbar ist.

3. Vorrichtung (1) nach einem der vorhergehenden Ansprüche, wobei die Steuerung (70) dazu ausgestaltet ist, das Bearbeitungswerkzeug (30) während seines drehenden und/oder spanabhebenden Eingriffs mit der Stirnfläche (54) des Werkstücks (50) entlang einer Vorschubrichtung (V) relativ zum Werkstück (50) zu bewegen, welche eine Richtungskomponente aufweist, die sich radial zur Werkstückdrehachse (W) erstreckt.

4. Vorrichtung (1) nach einem der vorhergehenden Ansprüche, wobei ein Kippwinkel (K) zwischen der Werkzeugdrehachse (Z) und einer sich transversal zur Werkstückdrehachse (W) erstreckenden Werkstückebene (x, y) einstellbar ist.

5. Vorrichtung (1) nach einem der vorhergehenden Ansprüche, wobei ein Achsabstand (a) zwischen der Werkzeugdrehachse (Z) und der Werkstückdrehachse (W) einstellbar ist.

6. Vorrichtung (1) nach Anspruch 2 und 5, wobei der Achsabstand (a) zwischen der Werkzeugdrehachse (Z) und der Werkstückdrehachse (W) in Abhängigkeit des Bearbeitungsradius (r) variierbar und/oder einstellbar ist.

7. Vorrichtung (1) nach Anspruch 6, wobei die Steuerung (70) dazu ausgestaltet ist, den Achsabstand (a) zwischen der Werkzeugdrehachse (Z) und der Werkstückdrehachse (W) mit größer werdendem Bearbeitungsradius (r) zu vergrößern.

8. Vorrichtung (1) nach einem der vorhergehenden Ansprüche 2 bis 7, wobei die Steuerung (70) dazu ausgestaltet ist, eine Werkzeugdrehzahl (DZ) der Werkzeugspindel (12) und/oder eine Werkstückdrehzahl (WZ) der Werkstückspindel (4) in Abhängigkeit des Bearbeitungsradius (r) zu regeln oder zu steuern.

9. Vorrichtung (1) nach Anspruch 8, wobei die Steuerung (70) dazu ausgestaltet ist, die Werkzeugdrehzahl (DZ) und die Werkstückdrehzahl (WZ) derart aufeinander abzustimmen, dass ein Verhältnis von Werkstückdrehzahl (WZ) zur Werkzeugdrehzahl (DZ) dem Verhältnis zwischen Werkzeugradius (RZ) und Bearbeitungsradius (r) entspricht.

10. Vorrichtung (1) nach einem der vorhergehenden Ansprüche 2 bis 9, wobei mittels der Steuerung (70) ein Winkel α zwischen 5° und 65°, zwischen 10° und 50° oder zwischen 10° und 30° während oder für die Bearbeitung des Werkstücks (50) einstellbar und/oder fixierbar ist, wobei folgende Wechselbeziehung gilt: sin α = a/r, wobei a der Achsabstand (a) zwischen der Werkstückdrehachse (Z) und der Werkstückdrehachse (W) und r der Bearbeitungsradius (r) ist.

11. Verfahren zur spanabhebenden Bearbeitung eines Werkstücks (50),
- bei welchem ein spanabhebenden Bearbeitungswerkzeug (30) um eine Werkzeugdrehachse (Z) rotierend angetrieben wird, wobei das Bearbeitungswerkzeug (30) eine sich zumindest abschnittsweise tangential zur Werkzeugdrehachse (Z) erstreckende und um die Werkzeugdrehachse (Z) rotierende Schneide (31, 32) aufweist,
- bei welchem ein Werkstück (50) um eine Werkstückdrehachse (W) rotierend angetrieben wird und eine sich transversal zur Werkstückdrehachse (W) erstreckende Stirnfläche (54) aufweist,
- wobei eine Position der Werkzeugdrehachse (Z) relativ zur Werkstückdrehachse (W) und/oder relativ zur Stirnfläche (54) des Werkstücks (50) eingestellt und/oder variiert wird, um die Schneide (31, 32) des Bearbeitungswerkzeugs (30) spanabhebend mit einem Bearbeitungsbereich (B) der Stirnfläche (54) des Werkstücks (50) in Eingriff zu bringen.

12. Verfahren nach Anspruch 11, wobei ein radialer Abstand zwischen dem Bearbeitungsbereich (B) der Stirnfläche (54) des Werkstücks (50), mit welchem das Werkzeug (30) spanabhebend in Eingriff steht, und der Werkstückdrehachse (W) während der spanabhebenden Bearbeitung der Stirnfläche (54) als Bearbeitungsradius (r) variabel eingestellt wird.

13. Verfahren nach Anspruch 11 oder 12, wobei ein Achsabstand (a) zwischen der Werkzeugdrehachse (Z) und der Werkstückdrehachse (W) während der spanabhebenden Bearbeitung der Stirnfläche (54) eingestellt und/oder variiert wird.

14. Verfahren nach Anspruch 12 und 13, wobei der Achsabstand (a) zwischen der Werkzeugdrehachse (Z) und der Werkstückdrehachse (W) in Abhängigkeit des Bearbeitungsradius (r) variiert und/oder eingestellt wird.

15. Computerprogrammprodukt umfassend Befehle, die bei der Ausführung des Programms durch eine Steuerung (70) einer Vorrichtung (1) nach einem der vorhergehenden Ansprüche 1 bis 10 diese veranlassen, das Verfahren nach einem der vorhergehenden Ansprüche 11 bis 14 durchzuführen.
